(19) Europäisches Patentamt / European Patent Office / Office européen des brevets

(11) EP 1 892 785 B1

(12) **EUROPEAN PATENT SPECIFICATION**

(45) Date of publication and mention of the grant of the patent: **02.04.2014 Bulletin 2014/14**

(21) Application number: **06745616.0**

(22) Date of filing: **24.04.2006**

(51) Int Cl.: ***H01M 8/04*** *(2006.01)* ***H01M 8/02*** *(2006.01)* ***H01M 8/14*** *(2006.01)*

(86) International application number: **PCT/JP2006/308538**

(87) International publication number: **WO 2006/134725 (21.12.2006 Gazette 2006/51)**

(54) **Fuel cell control system for fuel cell comprising an ionic liquid containing electrolyte**

Brennstoffzellen-Steuervorrichtung für Brennstoffzelle mit Elektrolyt enthaltend eine ionische Flüssigkeit

Système de contrôle pour pile à combustible comprenant un électrolyte contenant un liquide ionique

(84) Designated Contracting States: **DE FR GB**

(30) Priority: **15.06.2005 JP 2005174855**

(43) Date of publication of application: **27.02.2008 Bulletin 2008/09**

(73) Proprietor: **Nissan Motor Company Limited Yokohama-shi, Kanagawa 221-0023 (JP)**

(72) Inventor: **MIWA, Hiromichi c/o Nissan Motor Co., LTD. Kanagawa 243-0192 (JP)**

(74) Representative: **Schaeberle, Steffen Hoefer & Partner Patentanwälte Pilgersheimer Strasse 20 81543 München (DE)**

(56) References cited:
**EP-A2- 1 646 099**
**JP-A- 2003 123 791**
**JP-A- 2003 123 791**
**JP-A- 2003 535 450**
**JP-A- 2005 116 185**
**US-A1- 2004 137 312**
**US-A1- 2005 106 440**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a fuel cell control system and, more specifically, relates to a fuel cell control system including a polar substance amount controller which controls an amount of polar substance in an electrolyte according to an operating condition of a fuel cell. Herein, the fuel cell uses an ionic conductor containing cation and anion components as the electrolyte.

### BACKGROUND ART

In a conventional fuel cell, a sulfonic acid type electrolyte was used. The sulfonic acid type electrolyte was characterized by having a high protonic conductivity with water added, but the maximum operating temperature thereof was about 80°C.

In recent years, it has been proposed to apply room-temperature molten salt to the fuel cell. The room-temperature molten salt can be used in a high temperature range up to about 200°C and provides high protonic conductivity at 100°C or more. Specifically, a fuel cell is proposed which uses a protonic conductor containing room-temperature molten salt and assumes a non-humidification operation (see Japanese Patent Unexamined Publication No. 2003-123791). Another fuel cell is proposed which uses room-temperature molten salt composed of a hydrophobic anion and a hydrophobic cation to prevent incorporation of water into the room-temperature molten salt (see Japanese Patent Translation Publication No. 2003-535450).

### DISCLOSURE OF INVENTION

However, the fuel cells with room-temperature molten salt applied thereto have a problem that the protonic conductivity is lowered in a low-temperature range to a value below that of the conventional sulfonic acid type electrolyte containing water. In addition, it is assumed that the aforementioned fuel cell with the room-temperature molten salt applied thereto is used without water. Furthermore, the above publication reported that performances of the fuel cell were degraded by incorporation of water.

On the other hand, in our experiments, new technical knowledge was obtained in which adding a polar substance such as water to hydrophilic room-temperature molten salt increases the protonic conductance and improves fuel cell performances (for example, I-V characteristics).

The present invention was made based on the problems involved in the conventional arts and the aforementioned technical knowledge, and an object of the present invention is to provide a fuel cell control system which can maintain high protonic conductivity in all ranges from a low-load operation range (low-temperature range) to a high-load operation range (high-temperature range).

A fuel cell control system according to the present invention is defined by the features of claim 1.

### BRIEF DESCRIPTION OF THE DRAWINGS

FIG. 1 is a graph showing an I-V characteristic when a water content of an electrolyte increases.
FIG. 2 is a graph showing a relation between inverse of temperature and protonic conductivity.
FIG. 3 is a graph showing an I-V characteristic.
FIG. 4 is a flowchart showing control by the fuel cell control system according to the present invention.
FIG. 5 is a configuration diagram showing a first embodiment of the fuel cell control system according to the present invention.
FIG. 6 is a flowchart showing control by the first embodiment of the fuel cell control system according to the present invention.
FIG. 7 is a configuration diagram showing a second embodiment of the fuel cell control system according to present invention.
FIG. 8 is a flowchart showing control by the second embodiment of the fuel cell control system according to the present invention.
FIG. 9 is a configuration diagram showing a third embodiment of the fuel cell control system according to present invention.
FIG. 10 is a flowchart showing control by the third embodiment of the fuel cell control system according to the present invention.

FIG. 11 is a graph showing relations between load and each of pump flow rate and fan motor rotation speed in cases of a normal control and an increasing control.

FIG. 12 is an explanatory view showing a configuration of a generator modeled after the fuel cell.

FIG. 13 is a graph showing power generation performances of Example 1 and Comparative Example 1.

## BEST MODE FOR CARRYING OUT THE INVENTION

A description is given of a fuel cell control system of the present invention in detail below.

A fuel cell control system of the present invention controls an amount of a polar substance in an electrolyte of a fuel cell which uses as the electrolyte an ionic conductor including a cation component, an anion component, and the polar substance. Specifically, the fuel cell control system of the present invention includes a polar substance amount controller which controls the amount of polar substance in the electrolyte according to an operating condition of the fuel cell. By including the polar substance amount controller which controls the amount of polar substance in the electrolyte according to the operating condition, the fuel cell control system can maintain high protonic conductivity in all ranges from a low-load operation range (a low-temperature range) to a high-load operation range (a high-temperature range).

First, the ionic conductor used in the fuel cell of the present invention is described in detail.

The ionic conductor used in the electrolyte of the present invention contains a polar substance, a cation component, and an anion component. Such a configuration can increase the protonic conductance.

In the present invention, it is desirable that all or a part of the cation component be composed of a molecular cation and all or a part of the anion component be composed of a molecular anion. Such a configuration allows the cation and anion components to form a complex ion or the like in conjunction with the polar substance, thus further increasing the protonic conductivity. It is more desirable that the entire cation component be composed of a molecular cation and the entire anion component be composed of a molecular anion from the perspective of easy formation of the complex ion with a polar substance. The "molecular cation" and "molecular anion" mean a polyatomic cation and a polyatomic anion, respectively.

Furthermore, in the present invention, the ionic conductor includes a molecular cation and a molecular anion which constitute a room-temperature molten salt (ionic liquid). By containing such a room-temperature molten salt in the electrolyte, it is possible to prevent voltage reduction due to diffusion overvoltage (flooding) by produced water, which was caused in a conventional fuel cell requiring addition of water, and allows for power generation with high current density. The fuel cell itself can be therefore miniaturized. Furthermore, since the high temperature operation can be carried out, a heat radiation system also can be miniaturized. On the other hand, both of the cation and anion components constituting such room-temperature molten salt are not necessarily composed of a molecular cation and a molecular anion, respectively. Herein, the "room-temperature molten salt" is a salt molten at room temperature and indicates a stable medium which does not evaporate at high temperature and has high polarity and specific heat. As such a room-temperature molten salt, a typical one is a Brönsted acid-base type salt. Details thereof are described later.

In the present invention, it is desirable that the molecular cation include at least one type of a heteroatom in a molecule. Such a molecular cation containing a heteroatom has high ionic conductance and further increases the protonic conductivity. The heteroatom is an atom other than a carbon atom (C) and a hydrogen atom (H), and typical examples thereof are an oxygen atom (O), a nitrogen atom (N), a sulfur atom (S), a phosphorus atom (P), a fluorine atom (F), a chlorine atom (C1), a bromine atom (Br), an iodine atom (I), a boron atom (B), a cobalt atom (Co), an antimony atom (Sb).

Furthermore, in the present invention, it is desirable that all or a part of the room-temperature molten salt be a hydrophilic room-temperature molten salt. Containing water as the later-described polar substance, such a room-temperature molten salt can enhance a water retention capacity of the ionic conductor, thus having a more effect on increasing the protonic conductance.

Next, a concrete description is given of control by the fuel cell control system of the present invention using the drawings. FIG. 1 shows an I-V characteristic when the water content of the electrolyte is increased by the polar substance amount controller. As shown in the figure, it is found that by adding water as the polar substance to the room-temperature molten salt, the inclination corresponding to the IR loss is reduced.

FIG. 2 shows relations between inverse of temperature and protonic conductivity in a case of only the room-temperature molten salt and a case of the room-temperature molten salt with water added. As shown in the figure, it is found that, by adding water to the room-temperature molten salt, the protonic conductivity of the electrolyte is increased in most temperature ranges.

FIG. 3 shows the I-V characteristic in each condition. As shown in the figure, in a condition that the fuel cell is operated at low temperature/low load (low current density), it is desirable to take control so that the water content is maintained or increased in order to increase the protonic conductivity for an improvement in the performance of the fuel cell. In other words, the I-V characteristic in the case of the room-temperature molten salt mixed with water is better than that in the case of only the room-temperature molten salt.

On the other hand, in a condition that the fuel cell is operated at high temperature/high load (high current

density), an amount of heat generated from the fuel cell increases, and the protonic conductivity of the room-temperature molten salt which does not contain water is increased (see FIG. 2). Accordingly, it is desirable to take control for an improvement in the performance of the fuel cell so that the water content of the electrolyte is reduced and water produced during power generation of the fuel cell is prevented from condensing within the fuel cell. In other words, the I-V characteristic in the case of only the room-temperature molten salt is better than that in the case of the room-temperature molten salt mixed with water.

As shown in reference mark A in FIG. 3, the I-V characteristic tends to be degraded at working temperature of the conventional fuel cell using sulfonic acid electrolyte when the room-temperature molten salt is mixed with water. This is thought at this time to be because the voltage is lowered by flooding due to the produced water.

FIG. 4 shows a control flow of the fuel cell control system of the present invention. As shown in the figure, first, the operating condition of the fuel cell is determined. In the case of low temperature/low load (low current density), control to increase the water content is carried out by the polar substance amount controller, and in the case of high temperature/high load (high current density), control to reduce the water content is carried out. The protonic conductivity can be therefore increased in the case of low temperature/low load (low current density), and the fuel cell is allowed to operate without flooding to high temperature/high load (high current density).

(First Embodiment)

In the present invention, the polar substance amount controller is desirably an operating pressure controller which controls pressure of gas within the fuel cell. As the operating pressure controller, for example, it is possible to apply a throttle valve installed in a gas exhaust passage of a cathode of the fuel cell. FIG. 5 shows a configuration of a fuel cell control system of a first embodiment of the present invention. As shown in the figure, the fuel cell control system 1a of the present invention includes a hydrogen tank 20, a fuel cell 10, and a throttle valve 32 as an example of the operating pressure controller. The fuel cell 10 includes: an electrolyte 11 including the aforementioned ionic conductor; an anode 12 provided on a surface of the electrolyte 11; and a cathode 14 provided on the other surface thereof. To the anode 12 of the fuel cell 10, hydrogen is supplied from the hydrogen tank 20 through a hydrogen regulator 22. On the other hand, to the cathode 14 of the fuel cell 10, oxidation gas (air) is supplied through a compressor 30. The operating pressure is controlled by the throttle valve 32 according to the operating condition. Herein, the operating pressure is gas pressure at at least one of the anode 12 and cathode 14.

In the low temperature/low load (low current density) operating condition, an opening of the throttle valve 32 is reduced in order to increase the operating pressure. Increasing the operating pressure suppresses release of water within the electrolyte and allows water produced in power generation to easily condense within the fuel cell. The water content of the electrolyte can be therefore maintained or increased. Accordingly, the protonic conductivity of the electrolyte 11 is increased even in the low temperature/low load state, and the performance of the fuel cell can be increased.

On the other hand, in the operating condition of high temperature/high load (high current density), the amount of heat generated by the fuel cell increases, and the room-temperature molten salt which does not contain water has high protonic conductivity. In this operating condition, the opening of the throttle valve 32 is increased in order to reduce the operating pressure. Reducing the operating pressure promotes release of water within the electrolyte and makes it difficult for water produced in power generation to condense. The water content of the electrolyte can be therefore reduced. Accordingly, the protonic conductivity of the electrolyte 11 is increased even in the high temperature/high load state, and the performance of the fuel cell is increased. Moreover, it is possible to reduce load on a compressor which supplies the oxidation gas (air) under pressure to the fuel cell in the high load operation, thus reducing the size and cost of the compressor.

FIG. 6 shows a control flow of the fuel cell control system of the first embodiment. As shown in the figure, first, the operating condition of the fuel cell is determined, and in the case of low temperature/low load, control to increase pressure is carried out by the operating pressure controller. In the case of high temperature/high load, control to reduce pressure is carried out. This increases the protonic conductivity at low temperature/low load. Furthermore, the fuel cell can operate without flooding at high temperature/high load. The fuel cell itself can be therefore miniaturized.

In the present invention, preferably, the water content of the electrolyte is 0.01 to 50%. As the water content increases, the protonic conductivity increases. However, considering the operation at high temperature/high load, the water content is desirably not more than 50%. More preferably, the water content of the electrolyte is 0.01 to 25%. As described above, the protonic conductivity increases as the water content increases. When the water content exceeds 25%, the characteristics (viscosity and surface tension) of the room-temperature molten salt tend to change, and the contact state of the room-temperature molten salt with an electrode catalytic layer of the fuel cell may change to cause an increase in flooding. Still more preferably, the water content of the electrolyte is 0.01 to 10%. This is because even the water content of about 10% can provide high protonic conductivity.

(Second Embodiment)

In the present invention, the polar substance amount controller is desirably a humidity controller which controls humidity of at least oxidation gas among gases supplied to the fuel cell. In the present invention, moreover, the humidity controller is desirably a humidifier installed in a gas supply passage of an air electrode of the fuel cell. The humidities of both oxidation gas and hydrogen may be controlled.

FIG. 7 shows a configuration of a fuel cell control system of a second embodiment of the present invention. As shown in the figure, the fuel cell control system 1b of the present invention includes: a hydrogen tank 20; a fuel cell 10 including an electrolyte 11, an anode 12, and a cathode 13; and a humidifier 34 as an example of the humidity controller and further includes a water collection tank 36.

To the anode 12 side of the fuel cell 10, hydrogen is supplied from the hydrogen tank 20 through a hydrogen regulator 22. On the other hand, to the cathode 14 side of the fuel cell 10, oxidation gas (air) is supplied through a compressor 30 and the humidifier 34. The humidity of the oxidation gas is controlled by the humidifier 34 according to the operating condition. In the humidifier 34, a heating medium such as cooling water flows in a flow passage 34. Moreover, a part of water discharged from the cathode 14 is stored in the water collection tank 36 and supplied to the humidifier 34 through a water supply control valve 34a attached to the humidifier 34. In this example, the humidity controller is shown only on the cathode 14 side. However, the humidity controller may be attached to the anode 13 side or each side.

In the low temperature/low load (low current density) operating condition, the humidifier 34 is activated to increase the humidity of the oxidation gas. Increasing the humidity of the oxidation gas suppresses release of water within the electrolyte and promotes introduction of water produced in power generation into the electrolyte. The water content of the electrolyte can be therefore maintained or increased. Accordingly, the protonic conductivity of the electrolyte 11 is increased even at low temperature/low load, and the performance of the fuel cell can be increased.

On the other hand, in the high temperature/high load (high current density) operating condition, the amount of heat generated by the fuel cell increases, and the room-temperature molten salt which does not contain water also has high protonic conductivity. In this operating condition, the humidifier is stopped to reduce the humidity of the oxidation gas. Reducing the humidity of the oxidation gas promotes release of water within the electrolyte and makes it difficult for water produced during power generation to condense. The water content of the electrolyte can be therefore reduced. Accordingly, the protonic conductivity of the electrolyte 11 is increased even in the high temperature/high load state, and the performance of the fuel cell can be increased.

To reduce the water content of the electrolyte, the humidity of the oxidation gas is basically controlled so as not to exceed ambient humidity. When the ambient humidity is high, however, the humidity of the oxidation gas may be controlled by circulating the cooling water for dehumidification. Moreover, when the fuel cell is mounted on a vehicle or the like where the operating condition greatly fluctuates, it is desirable to use a humidity controller which performs both humidification and dehumidification from the viewpoint of providing a more excellent I-V characteristic.

FIG. 8 shows a control flow of the fuel cell control system of the second embodiment. As shown in the figure, the operating condition is determined. In the case of low load, water supply to the oxidation gas is performed by the humidity controller, and in the case of high load, water supply to the oxidation gas is stopped. This increases the protonic conductivity at low temperature/low load (low current density) and allows the fuel cell to operate without flooding to high temperature/high load. Furthermore, since the humidification operation is performed only for low load, the humidity controller such as a humidifier can be miniaturized.

(Third Embodiment)

In the present invention, the polar substance amount controller is desirably a temperature controller which controls temperature within the fuel cell. In the present invention, furthermore, it is desirable that the temperature controller be a radiator installed outside the fuel cell.

FIG. 9 shows a configuration of a fuel cell control system of a third embodiment of the present invention. As shown in the figure, the fuel cell control system 1c of the present invention includes: a hydrogen tank 20; a fuel cell 10 including an electrolyte 11, an anode 12, and a cathode 14; a radiator 24 as an example of the temperature controller; and a throttle valve 32 as an example of an operating pressure controller.

To the anode 12 side of the fuel cell 10, hydrogen is supplied from the hydrogen tank 20 through a hydrogen regulator 22. Moreover, on the anode 12 side of the fuel cell 10, a passage 24c connected to the radiator 24 is provided. In the passage 24c, a heating medium such as cooling water circulates and is cooled by the radiator 24 and a fan 24b. On the other hand, to the cathode 14 side of the fuel cell 10, oxidation gas (air) is supplied through a compressor 30. FIG. 9 shows that the heating medium circulates on only the anode 12 side. However, specifically, the fuel cell control system is configured so that coolant flows through a coolant passage which is attached to not only the anode 12 but the entire fuel cell 10.

Temperature of the cooling water circulating in the radiator 24 is controlled according to the operating condition of the fuel cell 10. Specifically, in the low temperature/low load (low current density) operating condition, the temperature within the fuel cell 10 lowers. Specifically, the flow rate of the heating medium is increased using a pump 24a or the motor speed of the fan 24b is increased so that an amount of heat removed by the radiator is equal to or more than the amount of heat released from the fuel cell. Water produced during power generation therefore condenses within the fuel cell 10, and the water content of the electrolyte increases. Accordingly, the protonic conductivity of the electrolyte 11 is increased even in the low temperature/low load state, and the performance of the fuel cell can be improved.

On the other hand, in the high temperature/high load (high current density) operating condition, the amount of heat generated by the fuel cell increases, and the room-temperature molten salt which does not contain water has high protonic conductivity. In this operating condition, the radiator is normally operated with the cooling amount being not especially increased. This promotes release of water within the electrolyte and makes it difficult for water produced in power generation to condense within the fuel cell 10. The water content of the electrolyte can be therefore reduced. Accordingly, the protonic conductivity of the electrolyte 11 is increased even in a high temperature/high load state, and the performance of the fuel cell can be increased.

FIG. 10 shows a control flow of the fuel cell control system of the third embodiment. As shown in the figure, first, the operating condition of the fuel cell 10 is determined. In the case of low load, increasing control to increase pump flow rate or fan motor speed of the radiator is carried out by the temperature controller, and in the case of a high load operating condition, a normal control by the temperature controller is carried out.

FIG. 11 shows relations of the pump flow rate and fan motor speed relative to load in the cases of the normal control and the increasing control. When the load on the fuel cell is high, the temperature controller is brought into the normal control, and when the load on the fuel cell is low, the temperature controller is brought into the increasing control. Even when the load on the fuel cell is low, if the electrolyte retains enough water, the temperature controller may be brought into not the increasing control but the normal control.

As described above, by connecting the temperature controller to the fuel cell, the protonic conductivity can be increased at low temperature/low load. Moreover, the fuel cell can operate without flooding up to high temperature/high load. The fuel cell itself can be therefore miniaturized. Furthermore, since the amount of heat removed from the fuel cell is increased mainly in the low load operation, it is not necessary to improve the cooling performance of the temperature controller.

The operating pressure controller, humidity controller, and temperature controller as the aforementioned polar substance amount controller can be used in proper combination.

(Ionic conductor)

The cation and anion components used in the ionic conductor of the present invention are described in detail using concrete examples. In the present invention, cation and anion components shown below can be used in proper combinations.

A molecular cation which is a type of the aforementioned cation component is an imidazolium derivative cation and, more specifically, a monosubstituted imidazolium derivative cation expressed by the following formula (1).

[Chem. 1]

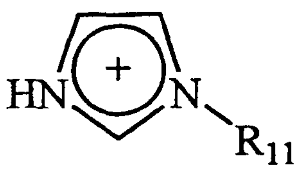

($R_{11}$ in the formula indicates hydrogen, a monovalent organic group, preferably, a monovalent hydrocarbon group, or more preferably, an alkyl group or arylalkyl group having 1 to 20 carbon atoms.)

Concrete examples of the carbon hydrogen group can be a methyl group and a butyl group.

Another type of the aforementioned cation component is a disubstituted imidazolium derivative cation expressed by the following formula (2).

[Chem. 2]

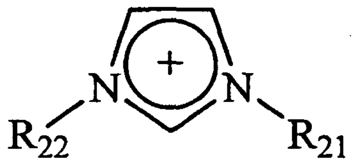

($R_{21}$ and $R_{22}$ in the formula are the same or different, each of which is a monovalent organic group, preferably a monovalent hydrocarbon group, or more preferably an alkyl group or arylalkyl group having 1 to 20 carbon atoms.)

$R_{21}$ and $R_{22}$ can be the same as the aforementioned $R_{11}$. In addition, each of $R_{21}$ and $R_{22}$ can be an ethyl group, a pentyl group, a hexyl group, an octyl group, a decyl group, a dodecyl group, a tetradecyl group, a hexadecyl group, an octadecyl group, a benzyl group, or a $\gamma$-phenylpropyl group. Moreover, concrete examples of a typical combination of these substituted groups are: a combination in which $R_{21}$ is a methyl group and $R_{22}$ is one of a methyl group, an ethyl group, a butyl group, a pentyl group, a hexyl group, an octyl group, a decyl group, a dodecyl group, a tetradecyl group, a hexadecyl group, an octadecyl group, a benzyl group, and a $\gamma$-phenylpropyl group; and a combination in which $R_{21}$ is an ethyl group and $R_{22}$ is a butyl group.

Still another type of the aforementioned cation component can be a trisubstituted imidazolium derivative cation expressed by the following formula (3).

[Chem. 3]

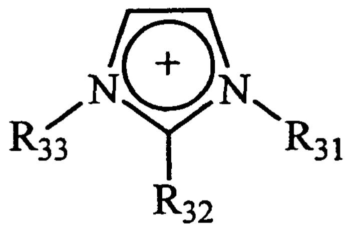

($R_{31}$ to $R_{33}$ in the formula are the same or different, each of which indicates a monovalent organic group, preferably a monovalent hydrocarbon group, or more preferably an alkyl group or arylalkyl group having 1 to 20 carbon atoms. $R_{31}$ and $R_{33}$ can be hydrogen.)

$R_{31}$ to $R_{33}$ can be the same as the aforementioned $R_{11}$. In addition, each of $R_{31}$ to $R_{32}$ can be an ethyl group, a propyl group, a hexyl group, or a hexadecyl group. Moreover, concrete examples of a typical combination of these substituted groups are: a combination in which $R_{31}$ is an ethyl group and $R_{32}$ and $R_{33}$ are methyl groups; a combination in which $R_{31}$ is a propyl group and $R_{32}$ and $R_{33}$ are methyl groups; a combination in which $R_{31}$ is a butyl group and $R_{32}$ and $R_{33}$ are methyl groups; a combination in which $R_{31}$ is a hexyl group and $R_{32}$ and $R_{33}$ are methyl groups; and a combination in which $R_{31}$ is a hexadecyl group and $R_{32}$ and $R_{33}$ are methyl groups.

Still another type of the aforementioned cation component can be a pyridinium derivative cation expressed by the following formula (4).

[Chem. 4]

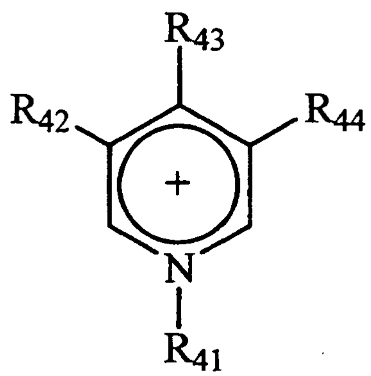

($R_{41}$ to $R_{44}$ in the formula are the same or different, each of which indicates hydrogen, a monovalent organic group, preferably a monovalent hydrocarbon group, or more preferably an alkyl group or arylalkyl group having 1 to 20 carbon atoms.)

$R_{41}$ to $R_{44}$ can be the same as the aforementioned $R_{11}$. In addition, each of $R_{41}$ to $R_{44}$ can be hydrogen, an ethyl group, a hexyl group, or an octyl group. Moreover, concrete examples of a typical combination of these substituted groups are: a combination in which $R_{41}$ is an ethyl group and $R_{42}$ to $R_{44}$ are hydrogen; a combination in which $R_{41}$ is a butyl group and $R_{42}$ to $R_{44}$ are hydrogen; a combination in which $R_{41}$ is a butyl group, $R_{42}$ to $R_{44}$ are hydrogen. Other examples thereof are: a combination in which $R_{41}$ is a butyl group, $R_{42}$ and $R_{43}$ are hydrogen, and $R_{44}$ is a methyl group; a combination in which $R_{41}$ is a butyl group, $R_{42}$ and $R_{44}$ are hydrogen, and $R_{43}$ is a methyl group; a combination in which $R_{41}$ is a butyl group, $R_{42}$ and $R_{43}$ are methyl groups, and $R_{44}$ is hydrogen; a combination in which $R_{41}$ is a butyl group, $R_{42}$ and $R_{44}$ are methyl groups, and $R_{43}$ is hydrogen; and a combination in which $R_{41}$ is a butyl group, $R_{42}$ and $R_{43}$ are hydrogen, and $R_{44}$ is an ethyl group. Other examples thereof are: a combination in which $R_{41}$ is a hexyl group and $R_{42}$ to $R_{44}$ are hydrogen; a combination in which $R_{41}$ is a hexyl group, $R_{42}$ and $R_{43}$ are hydrogen, and $R_{44}$ is a methyl group; a combination in which $R_{41}$ is a hexyl group, $R_{42}$ and $R_{44}$ are hydrogen, and $R_{43}$ is a methyl group; a combination in which $R_{41}$ is an octyl group and $R_{42}$ to $R_{44}$ are hydrogen; a combination in which $R_{41}$ is an octyl group, $R_{42}$ and $R_{43}$ are hydrogen, and $R_{44}$ is a methyl group; and a combination in which $R_{41}$ is an octyl group, $R_{42}$ and $R_{44}$ are hydrogen, and $R_{43}$ is a methyl group.

Still another type of the aforementioned cation component can be a pyrrolidinium derivative cation expressed by the following formula (5).

[Chem. 5]

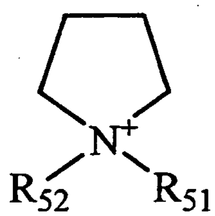

($R_{51}$ and $R_{52}$ in the formula may be the same or different, each of which indicates hydrogen, a monovalent organic group, preferably a monovalent hydrocarbon group, or more preferably an alkyl group or arylalkyl group having 1 to 20 carbon atoms.)

$R_{51}$ and $R_{52}$ can be the same as the aforementioned $R_{11}$. Each of $R_{51}$ and $R_{52}$ can be an ethyl group, a propyl group, a hexyl group, or an octyl group. Moreover, concrete examples of a typical combination of these substituted groups are: a combination in which $R_{51}$ is a methyl group and $R_{52}$ is any one of a methyl group, an ethyl group, a butyl group, a hexyl group, and an octyl group; a combination in which $R_{51}$ is an ethyl group and $R_{52}$ is a butyl group; a combination in which each of $R_{51}$ and $R_{52}$ is any one of a propyl group, a butyl group, and a hexyl group.

Still another kind thereof can be an ammonium derivative cation expressed by the following formula (6).

[Chem. 6]

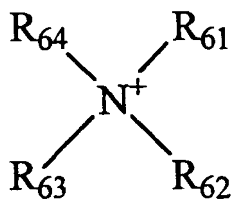

($R_{61}$ to $R_{64}$ in the formula may be the same or different, each of which indicates a monovalent organic group, preferably a monovalent hydrocarbon group, or more preferably an alkyl group or arylalkyl group having 1 to 20 carbon atoms.)

$R_{61}$ to $R_{64}$ can be the same as the aforementioned $R_{11}$. Each of $R_{61}$ to $R_{64}$ can be an ethyl group or an octyl group. Moreover, concrete examples of a typical combination of these substituted groups are: a combination in which each of $R_{61}$ to $R_{64}$ is any one of a methyl group, an ethyl group, and a butyl group; and a combination in which each of $R_{61}$ is a methyl group and $R_{62}$ to $R_{64}$ are octyl groups.

Still another type of the aforementioned cation component can be a phosphonium derivative cation expressed by the following formula (7).

[Chem. 7]

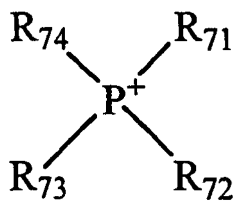

($R_{71}$ to $R_{74}$ in the formula may be the same or different, each of which indicates a monovalent organic group, preferably a monovalent hydrocarbon group, or more preferably an alkyl group or arylalkyl group having 1 to 20 carbon atoms.)

$R_{71}$ to $R_{74}$ can be the same as the aforementioned $R_{11}$. Each of $R_{71}$ to $R_{74}$ can be an ethyl group, an isobutyl group, a hexyl group, an octyl group, a tetradecyl group, hexadecyl group, a phenyl group, or a benzyl group. Moreover, concrete examples of a typical combination of these substituted groups are: a combination in which $R_{71}$ is a methyl group and each of $R_{72}$ to $R_{74}$ is a butyl group or an isobutyl group; a combination in which $R_{71}$ is an ethyl group and each of $R_{72}$ to $R_{74}$ is a butyl group; a combination in which each of $R_{71}$ to $R_{74}$ is a butyl group or an octyl group; a combination in which $R_{71}$ is a tetradecyl group and each of $R_{72}$ to $R_{74}$ is a butyl group or a hexyl group; a combination in which $R_{71}$ is a hexadecyl group and $R_{72}$ to $R_{74}$ are butyl groups; and a combination in which $R_{71}$ is a benzyl group and $R_{72}$ to $R_{74}$ are phenyl groups.

Still another type of the aforementioned cation component can be a guanidinium derivative cation expressed by the following formula (8).

[Chem. 8]

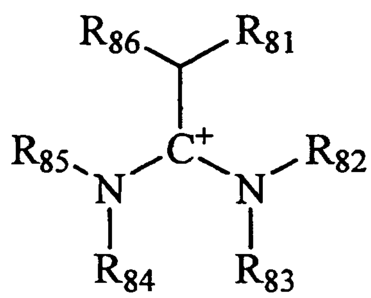

($R_{81}$ to $R_{86}$ in the formula may be the same or different, each of which indicates hydrogen, a monovalent organic group, preferably a monovalent hydrocarbon group, or more preferably an alkyl group or arylalkyl group having 1 to 20 carbon atoms.)

Each of $R_{81}$ to $R_{86}$ can be the same as the aforementioned $R_{11}$ and in addition, can be an ethyl group, a propyl group, or an isopropyl group. Moreover, concrete examples of a typical combination of these substituted groups are: a combination in which all of $R_{81}$ to $R_{86}$ are hydrogen or methyl groups; a combination in which $R_{81}$ is an ethyl group, $R_{82}$ to $R_{85}$ are methyl groups, $R_{86}$ is hydrogen; a combination in which $R_{81}$ is an isopropyl group, $R_{82}$ to $R_{85}$ are methyl groups, $R_{86}$ is hydrogen; and a combination in which $R_{81}$ is a propyl group and $R_{82}$ to $R_{86}$ are methyl groups.

Still another type of the aforementioned cation component can be an isouronium derivative cation expressed by the following formula (9).

[Chem. 9]

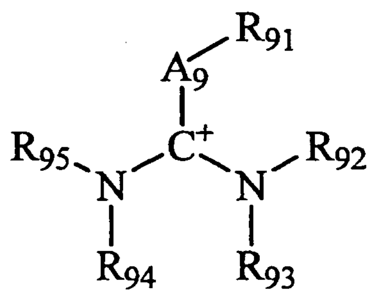

($R_{91}$ to $R_{95}$ in the formula may be the same or different, each of which indicates hydrogen, a monovalent organic group, preferably a monovalent hydrocarbon group, or more preferably an alkyl group or arylalkyl group having 1 to 20 carbon atoms. $A_9$ indicates an oxygen or sulfur atom.)

Each of $R_{91}$ to $R_{95}$ can be the same as the aforementioned $R_{11}$ and in addition, can be hydrogen or an ethyl group. Moreover, concrete examples of a typical combination of these substituted groups can be: a combination in which $A_9$ is an oxygen atom and all of $R_{91}$ to $R_{95}$ are methyl groups; a combination in which $A_9$ is an oxygen atom, $R_{91}$ is an ethyl group, and $R_{92}$ to $R_{95}$ are methyl groups; a combination in which $A_9$ is a sulfur atom (S), $R_{91}$ is an ethyl group, and $R_{92}$ to $R_{95}$ are methyl groups.

On the other hand, the aforementioned molecular anion can be a sulfate anion [$SO_4^{2-}$], a hydrogen sulfate anion [$HSO^{4-}$], or a sulfate ester anion expressed by the following formula (10).

[Chem. 10]

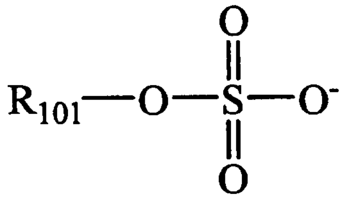

($R_{101}$ in the formula indicates a monovalent organic group, preferably a monovalent hydrocarbon group, or more preferably an alkyl or arylalkyl group having 1 to 20 carbon atoms.)

$R_{101}$, can be the same as the aforementioned $R_{11}$. In addition, $R_{101}$ can be an ethyl group, a hexyl group, or an octyl group. Typical concrete examples of the aforementioned molecular anion are anions in which $R_{101}$ is a methyl group, an ethyl group, a butyl group, a hexyl group, or an octyl group.

Moreover, the aforementioned molecular anion can be a sulfate ester anion expressed by the following formula (11).

[Chem. 11]

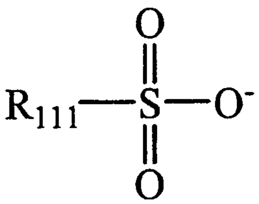

($R_{111}$ in the formula indicates a monovalent organic group, preferably a monovalent hydrocarbon group, more preferably an alkyl or arylalkyl group having 1 to 20 carbon atoms, or a fluorine-substitution product thereof.)

Typical concrete examples are: an anion in which $R_{111}$ is a fluorine-substituted methyl group (corresponding to a trifluoromethanesulfonate anion); and an anion in which $R_{111}$ is a *p*-tolyl group (corresponding to a *p*-toluenesulfonate anion).

Still moreover, the aforementioned molecular anion can be any one of amide and imide anions expressed by the following formulae (12) to (14). The amide and imide anions are not necessarily limited to these anions.

[Chem. 12] $(CN)_2N^-$

[Chem. 13] $[N(CF_3)2]^-$

[Chem. 14] $[N(SO_2CF_3)_2]^-$

Still moreover, the aforementioned molecular anion can be a methane anion expressed by the following formula (15) or (16). The methane anions are not necessarily limited to these anions.

[Chem. 15] $[HC(SO_2CF_3)_2]^-$

[Chem. 16] $C(SO_2CF_3)_3^-$

Still moreover, the aforementioned molecular anion can be a boron-contained compound anion expressed by any one of the following formulae (17) to (23). The boron-contained compound anion is not necessarily limited to these anions.

[Chem. 17] $BF_4^-$

[Chem. 18] $B(CN)_4^-$

[Chem. 19]

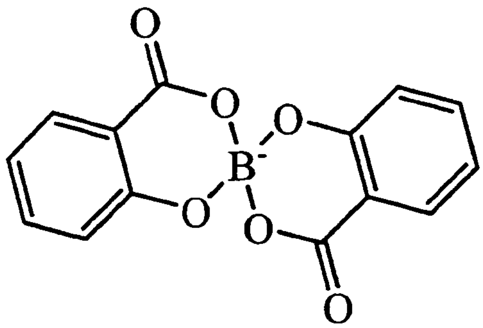

[Chem. 20]

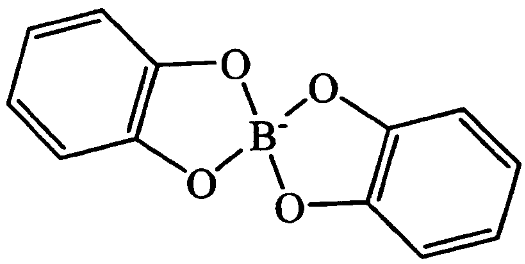

[Chem. 21]

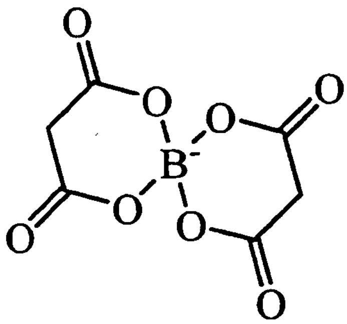

[Chem. 22]

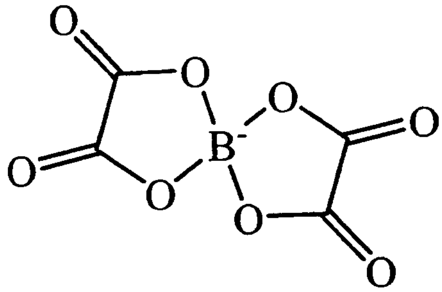

[Chem. 23]

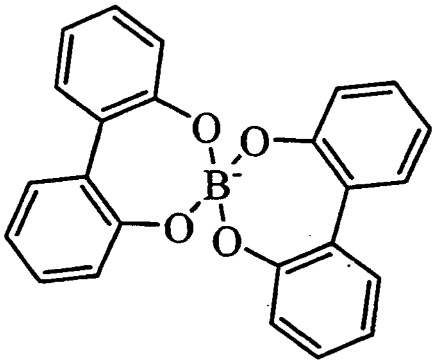

The boron-contained compound anion is not necessarily limited to these anions.

Still moreover, the aforementioned molecular anion can be a phosphorus-contained compound anion expressed by one of the following formulae (24) to (32). The phosphorus-contained compound anion is not necessarily limited to these anions.

[Chem. 24] $PF_6^-$

[Chem. 25] $(C_2F_5)_3PF_3^-$

[Chem. 26] $(C_3F_7)_3PF_3^-$

[Chem. 27] $(C_4F_9)_3PF_3^-$

[Chem. 28]

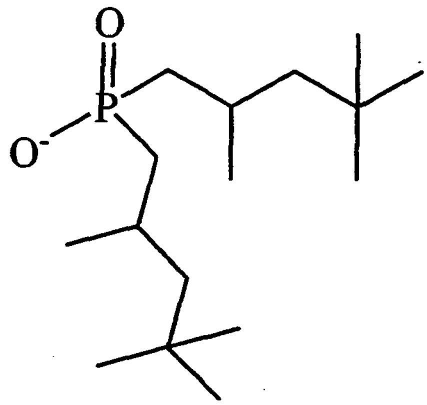

[Chem. 29] $(C_2F_5)_3P(O)O^-$

[Chem. 30] $PO_4^{3-}$

[Chem.31] $HPO_4^{2-}$

[Chem. 32] $(C_2F_5)_3PO_4^-$

Still moreover, the aforementioned molecular anion can be a carbonate anion expressed by one of the following formulae (33) to (34). The carbonate anion is not necessarily limited to these anions.

[Chem. 33] $C_{10}H_{21}COO^-$

[Chem. 34] $CF_3COO^-$

Still moreover, the aforementioned molecular anion can be a metal element-contained anion expressed by the following formula (35) or (36). The metal element-contained anion is not necessarily limited to these anions.

[Chem. 35] $SbF_6^-$

[Chem. 36] $Co(CO)_4^-$

On the other hand, other examples of the anion component are a fluorine anion ($F^-$), a chlorine anion ($Cl^-$), a bromine anion ($Br^-$), and an iodine anion as halogenide anions, which are not molecular anions.

Furthermore, in the present invention, it is desirable to combine an imidazolium derivative cation, the pyridinium derivative cation, the pyrrolidinium derivative cation, the ammonium derivative cation, or a mixture of an arbitrary combination of these molecular cations with a boron tetrafluoride anion, the trifluoromethanesulfonate anion, a hydrogen fluoride anion $[(HF_n)F^-$ (n is desirably a real number of 1 to 3)], a monohydrogen sulfate anion, a dihydrogenphosphate anion, or an arbitrary combination of these molecular anions. This is because such combinations of the molecular cations and anions are room-temperature molten salts and have good hydrophilic nature.

In the present invention, the used polar substance preferably functions as a polar solvent. It is desirable that the polar substance be an electrically neutral substance in which positive and negative charges are unevenly distributed and be especially a compound having a structure in which positive and negative charges are divided at both ends.

To the indices of such polarity, it is possible to apply a polarity value, dipole moment, permittivity, hydrogen bonding property, and solubility parameter.

The polar substance has preferably a polar value larger than 30, more preferably larger than 40, and still more preferably larger than 50. When the polar substance has a polarity value less than 30, the polarity thereof is insufficient, and it is difficult for the polar substance to fulfill the function as a solvent. Table 1 shows solubility parameters ($\delta$) and polarity values (Et) of typical substances. Table 1 is excerpted from "Shin jikken kagaku kouza (New experimental chemistry)", Editor: the Chemical Society of Japan, Publisher: Maruzen Co., Ltd.

[Table 1]

| Solvent | Chemical Formula | Solubility Parameter (δ) | Polarity Value (Et) |
|---|---|---|---|
| Water | $H_2O$ | 23.4 | 63.1 |
| Ethanol | $C_2H_5OH$ | 12.9 | 51.9 |
| Methanol | $CH_3OH$ | 14.2 | 55.5 |
| Chloroform | $CHCl_3$ | 9.24 | 39.1 |
| Tetrahydrofuran | $C_4H_8O$ | - | - |
| Acetone | $CH_3COCH_3$ | 9.8 | 42.2 |
| Ethyl Acetate | $CH_3COOC_2H_5$ | 9.04 | 38.1 |
| Butyl Acetate | $C_6H_{12}O_2$ | - | - |
| Dimethylsulfoxide | $(CH_3)_2SO$ | 13 | 45 |
| Dimethylformamide | $(CH_3)_2NOCH$ | 12 | 43.8 |
| Acetonitrile | $CH_3CN$ | 11.8 | 44.3 |
| Acetic Acid | $CH_3COOH$ | 10.1 | 51.9 |
| 1-propanol | $1\text{-}C_3H_7OH$ | 11.9 | 50.7 |
| 2-propanol | $2\text{-}C_3H_7OH$ | 11.5 | 48.6 |
| 1-butanol | $1\text{-}C_4H_9OH$ | 11.4 | 50.2 |
| Pyridine | $C_5H_5N$ | 10.8 | 40 |
| α-picoline | $\alpha\text{-}CH_3C_5H_4N$ | - | 38.3 |
| Dichloromethane | $CH_2Cl_2$ | 9.88 | 41.1 |
| Carbon Tetrachloride | $CCl_4$ | 8.58 | 32.5 |
| Benzene | $C_6H_6$ | 9.15 | 34.5 |
| Cyclohexane | $C_6H_{12}$ | 8.2 | - |
| Hexane | $C_6H_{14}$ | 7.24 | 30.9 |

The solubility parameters in the table are calculated from the following Equation 1. A larger solubility parameter indicates a larger solubility.

$$\delta = (E/V)^{1/2} \qquad \ldots\text{Equation 1}$$

(E and V in the equation indicate cohesive energy of a liquid molecule and a molecular volume, respectively)

Furthermore, in the present invention, the polar substance is suitably water, methanol, ethanol, propanol, butanol, ethylene glycol, propylene glycol, butylene glycol, acetone, acetonitrile, dimethylsulfoxide, dimethylformamide, pyridine, α-picoline, methyl acetate, ethyl acetate, propyl acetate, butyl acetate, acetic acid, ethylene oxide, polyethylene oxide, polypropylene oxide, or a mixture of an arbitrary combination of these polar substances. From the perspective of the high polarity and solubility, water is suitably used.

The polar substance can be a substance of high molecular weight such as polyethylene glycol and polypropylene glycol. Moreover, when such a polar substance of high molecular weight is configured to be contained, it is desirable to add dimethylsulfoxide, dimethylformamide, or the like.

In the ionic conductor of the present invention, the manufacturing method thereof is not particularly limited. The ionic conductor can be produced by a conventionally known method.

In the case of mixing the room-temperature molten salt and water as an example of the polar substance, if the room-temperature molten salt has high viscosity, the room-temperature molten salt and water are heated to about 50 to 80°C and mixed, thus obtaining a uniform mixture. By mixing the room-temperature molten salt and water, the effect

on improving the protonic conductance obtained by the coexistence of the both can be further increased. The molar mixing ratio of the room-temperature molten salt to water in such a case should be 100/1 to 1/5 (room-temperature molten salt/water). Such a ratio can have more effect on improving the protonic conductance.

The method of manufacturing the used room-temperature molten salt is not especially limited, but the room-temperature molten salt can be produced by conventionally known neutralization or the like.

The ionic conductor is described in more detail below using an example and a comparative example, but the present invention is not limited to the example.

(Example 1)

A room-temperature molten salt (2EtEMImBF$_4$) composed of 1,2-diethyl-3-methyl-imidazolium cation, which are a type of imidazolium trisubstituted derivative cations, and a boron tetrafluoride anion, which are a type of boron-contained compound anions, and water as an example of the polar substance were mixed in a molar ratio of 1/1 (room-temperature molten salt/water), thus obtaining the ionic conductor of the example.

(Comparative Example 1)

An ionic conductor composed of only 2EtEMImBF$_4$ was used.

Using the ionic conductors of Example 1 and Comparative Example 1, a generator modeled after the fuel cell was produced. FIG. 12 shows a configuration of the generator. Specifically, an ionic conductor 42 was held between electrodes 40 and 41 which were composed of carbon paper with catalytic metal such as platinum applied thereto.

Power generation performances (I-V characteristics) were evaluated with hydrogen and oxygen (air) supplied to the back of the electrode 40 and to the back of the other electrode 41, respectively. FIG. 13 shows the power generation performances (relations between current and voltage) as the obtained results. FIG. 13 revealed that Example 1 was more excellent in the IC characteristic than Comparative Example 1.

INDUSTRIAL APPLICABILITY

The present invention is a fuel cell control system which controls the water content of an electrolyte of a fuel cell using an ionic liquid containing cation and anion components as the electrolyte. The fuel cell control system is characterized by including a polar substance amount controller controlling an amount of polar substance in the electrolyte according to the operating condition of the fuel cell. It is therefore possible to provide a fuel cell control system which can maintain high protonic conductivity in all ranges from the low-load operation range to the high-load operation range.

## Claims

1. A fuel cell control system, comprising:

    a fuel cell using an ionic conductor as an electrolyte, the ionic conductor comprising: an ionic liquid including a cation component; an anion component; and a polar substance; and
    a polar substance amount controller controlling an amount of the polar substance in the electrolyte according to an operating condition of the fuel cell, wherein the polar substance amount controller takes control to increase an amount of the polar substance when the fuel cell is at low temperature, and takes control to reduce the amount of the polar substance when the fuel cell is at high temperature.

2. The fuel cell control system according to claim 1, wherein the polar substance is water.

3. The fuel cell control system according to claim 2, wherein the polar substance amount controller is an operating pressure controller controlling pressure of gas within the fuel cell.

4. The fuel cell control system according to claim 3, wherein the operating pressure controller is a throttle valve attached to a gas exhaust passage connected to an air electrode of the fuel cell.

5. The fuel cell control system according to claim 2, wherein the polar substance amount controller is a humidity controller controlling humidity of at least oxidation gas between gases supplied to the fuel cell.

6. The fuel cell control system according to claim 5, wherein the humidity controller is a humidifier attached to a gas

supply passage connected to an air electrode of the fuel cell.

7. The fuel cell control system according to claim 2, wherein the polar substance amount controller is a temperature controller controlling temperature within the fuel cell.

8. The fuel cell control system according to claim 7, wherein the temperature controller is a radiator.

9. The fuel cell control system according to claim 1, wherein at least a part of the cation component is composed of a molecular cation and at least a part of the anion component is composed of a molecular anion.

10. The fuel cell control system according to claim 9, wherein the electrolyte comprises a room-temperature molten salt composed of the molecular cation and the molecular anion.

11. The fuel cell control system according to claim 9, wherein the molecular cation comprises at least one of heteroatoms.

12. The fuel cell control system according to claim 10, wherein the room-temperature molten salt is hydrophilic.

13. The fuel cell control system according to claim 12, wherein at least a part of the room-temperature molten salt is composed of: at least one of the molecular cation selected from a group consisting of an imidazolium derivative cation, a pyridinium derivative cation, a pyrrolidinium derivative cation, and an ammonium derivative cation; and at least one of the molecular anion selected from a group consisting of a boron tetrafluoride anion, a trifluoromethanesulfonate anion, a hydrogen fluoride anion, a monohydrogen sulfate anion, and a dihydrogen phosphate anion.

14. The fuel cell control system according to claim 1, wherein the polar substance has a polarity value more than 30.

15. The fuel cell control system according to claim 1, wherein the polar substance is one selected from the group consisting of water, methanol, ethanol, propanol, butanol, ethylene glycol, propylene glycol, butylene glycol, acetone, acetonitrile, dimethylsulfoxide, dimethylformamide, pyridine, -picoline, methyl acetate, ethyl acetate, propyl acetate, butyl acetate, acetic acid, ethylene oxide, polyethylene oxide, and polypropylene oxide.

16. The fuel cell control system according to claim 2, wherein a content of water in the electrolyte is 0.01 to 50 mol.- %.

17. The fuel cell control system according to claim 2, wherein a content of water in the electrolyte is 0.01 to 25 mol.- %.

18. The fuel cell control system according to claim 2, wherein a content of water in the electrolyte is 0.01 to 10 mol. - %.

**Patentansprüche**

1. Brennstoffzellensteuer-/regelsystem, umfassend:

   eine Brennstoffzelle, die als Elektrolyt einen ionischen Leiter verwendet, wobei der ionische Leiter eine ionische Flüssigkeit, enthaltend eine kationische Komponente; eine anionische Komponente; und eine polare Substanz, umfasst; und

   eine Steuer-/Regeleinheit für eine polare Substanzmenge, zum Steuern/Regeln einer Menge der polaren Substanz in dem Elektrolyt gemäß einer Betriebsbedingung der Brennstoffzelle, wobei die Steuer-/Regeleinheit für eine polare Substanzmenge eine Steuerung/Regelung zum Erhöhen einer Menge an polarer Substanz ausführt, wenn sich die Brennstoffzelle auf einer niedrigen Temperatur befindet und eine Steuerung/Regelung zum Reduzieren einer Menge an polarer Substanz ausführt, wenn sich die Brennstoffzelle auf einer hohen Temperatur befindet.

2. Brennstoffzellensteuer-/regelsystem nach Anspruch 1, wobei die polare Substanz Wasser ist.

3. Brennstoffzellensteuer-/regelsystem nach Anspruch 2, wobei die Steuer-/Regeleinheit für eine polare Substanzmenge eine Betriebsdrucksteuer-/regeleinheit zum Steuern/Regeln eines Gasdrucks in der Brennstoffzelle ist.

4. Brennstoffzellensteuer-/regelsystem nach Anspruch 3, wobei die Betriebsdrucksteuer-/regeleinheit ein Drosselklappenventil ist, das an einem Abgaskanal angeordnet ist, der mit einer Luftelektrode der Brennstoffzelle verbunden ist.

5. Brennstoffzellensteuer-/regelsystem nach Anspruch 2, wobei die Steuer-/Regeleinheit für eine polare Substanzmenge eine Feuchtigkeitssteuer-/regeleinheit ist, die die Feuchtigkeit von mindestens einem Oxidationsgas aus den der Brennstoffzelle zugeführten Gasen steuert/regelt.

6. Brennstoffzellensteuer-/regelsystem nach Anspruch 5, wobei die Feuchtigkeitssteuer-/regeleinheit ein Befeuchter ist, der an einem Gasverteilungskanal angeordnet ist, der mit der Luftelektrode der Brennstoffzelle verbunden ist.

7. Brennstoffzellensteuer-/regelsystem nach Anspruch 2, wobei die Steuer-/Regeleinheit für eine polare Substanzmenge eine Temperatursteuer-/regeleinheit ist, die eine Temperatur in der Brennstoffzelle steuert/regelt.

8. Brennstoffzellensteuer-/regelsystem nach Anspruch 7, wobei die Temperatursteuer-/regeleinheit ein Radiator ist.

9. Brennstoffzellensteuer-/regelsystem nach Anspruch 1, wobei mindestens ein Teil der kationischen Komponente aus einem molekularen Kation gebildet ist und mindestens ein Teil der anionischen Komponente aus einem molekularen Anion gebildet ist.

10. Brennstoffzellensteuer-/regelsystem nach Anspruch 9, wobei der Elektrolyt ein bei Raumtemperatur geschmolzenes Salz umfasst, das aus dem molekularen Kation und dem molekularen Anion gebildet ist.

11. Brennstoffzellensteuer-/regelsystem nach Anspruch 9, wobei das molekulare Kation mindestens ein Heteroatom umfasst.

12. Brennstoffzellensteuer-/regelsystem nach Anspruch 10, wobei das bei Raumtemperatur geschmolzene Salz hydrophil ist.

13. Brennstoffzellensteuer-/regelsystem nach Anspruch 12, wobei mindestens ein Teil des bei Raumtemperatur geschmolzenen Salzes aus dem molekularen Kation, ausgewählt aus der Gruppe bestehend aus einem Imidazolderivatisierten Kation, einem pyridin-derivatisierten Kation, einem pyrrolidonderivatisierten Kation und/oder einem ammonium-derivatisierten Kation; und dem molekularen Anion, ausgewählt aus der Gruppe bestehend aus einem Bortetrafluorid-Anion, einem Trifluormethansulfonat-Anion, einem Fluorwasserstoff-Anion, einem Monohydrogensulfat-Anion und/oder einem Dihydrogenphosphat-Anion, gebildet ist.

14. Brennstoffzellensteuer-/regelsystem nach Anspruch 1, wobei die polare Substanz einen Polaritätswert von mehr als 30 hat.

15. Brennstoffzellensteuer-/regelsystem nach Anspruch 1, wobei die polare Substanz ausgewählt ist aus der Gruppe bestehend aus Wasser, Methanol, Ethanol, Propanol, Butanol, Ehtylenglycol, Propylenglycol, Butylenglycol, Azeton, Acetonitril, Dimethylsulfoxid, Dimethylformamid, Pyridin, Picolin, Methylacetat, Ethylacetat, Propylacetat, Butylacetat, Essigsäure, Ethylenoxid, Polyethylenoxid und Polypropylenoxid.

16. Brennstoffzellensteuer-/regelsystem nach Anspruch 2, wobei der Gehalt an Wasser im Elektrolyt 0,01 bis 50 mol.-% beträgt.

17. Brennstoffzellensteuer-/regelsystem nach Anspruch 2, wobei der Gehalt an Wasser im Elektrolyt 0,01 bis 25 mol.-% beträgt.

18. Brennstoffzellensteuer-/regelsystem nach Anspruch 2, wobei der Gehalt an Wasser im Elektrolyt 0,01 bis 10 mol.-% beträgt.

**Revendications**

1. Système de régulation pour pile à combustible, comprenant :

   une pile à combustible utilisant un conducteur ionique en tant qu'électrolyte, le conducteur ionique comprenant : un liquide ionique comportant un composant cationique ; un composant anionique ; et une substance polaire ; et un régulateur de quantité de substance polaire régulant une quantité de la substance polaire dans l'électrolyte selon une condition de fonctionnement de la pile à combustible,

où le régulateur de quantité de substance polaire prend le contrôle pour augmenter une quantité de la substance polaire lorsque la pile à combustible est à basse température, et prend le contrôle pour réduire la quantité de la substance polaire lorsque la pile à combustible est à température élevée.

**2.** Système de régulation pour pile à combustible selon la revendication 1, dans lequel la substance polaire est l'eau.

**3.** Système de régulation pour pile à combustible selon la revendication 2, dans lequel le régulateur de quantité de substance polaire est un régulateur de pression de fonctionnement régulant la pression de gaz à l'intérieur de la pile à combustible.

**4.** Système de régulation pour pile à combustible selon la revendication 3, dans lequel le régulateur de pression de fonctionnement est un papillon des gaz fixé à un passage d'échappement de gaz relié à une électrode à air de la pile à combustible.

**5.** Système de régulation pour pile à combustible selon la revendication 2, dans lequel le régulateur de quantité de substance polaire est un régulateur d'humidité régulant l'humidité d'au moins un gaz d'oxydation parmi des gaz fornis à la pile à combustible.

**6.** Système de régulation pour pile à combustible selon la revendication 5, dans lequel le régulateur d'humidité est un humidificateur fixé à un passage d'alimentation en gaz relié à une électrode à air de la pile à combustible.

**7.** Système de régulation pour pile à combustible selon la revendication 2, dans lequel le régulateur de quantité de substance polaire est un régulateur de température régulant la température à l'intérieur de la pile à combustible.

**8.** Système de régulation pour pile à combustible selon la revendication 7, dans lequel le régulateur de température est un radiateur.

**9.** Système de régulation pour pile à combustible selon la revendication 1, dans lequel au moins une partie du composant cationique est constituée d'un cation moléculaire et au moins une partie du composant anionique est constituée d'un anion moléculaire.

**10.** Système de régulation pour pile à combustible selon la revendication 9, dans lequel l'électrolyte comprend un sel fondu à température ambiante constitué du cation moléculaire et de l'anion moléculaire.

**11.** Système de régulation pour pile à combustible selon la revendication 9, dans lequel le cation moléculaire comprend au moins un des hétéroatomes.

**12.** Système de régulation pour pile à combustible selon la revendication 10, dans lequel le sel fondu à température ambiante est hydrophile.

**13.** Système de régulation pour pile à combustible selon la revendication 12, dans lequel au moins une partie du sel fondu à température ambiante est constituée : d'au moins un cation moléculaire choisi dans un groupe constitué d'un cation dérivé d'imidazolium, d'un cation dérivé de pyridinium, d'un cation dérivé de pyrrolidinium et d'un cation dérivé d'ammonium ; et au moins un anion moléculaire choisi dans un groupe constitué d'un anion de tétrafluorure de bore, d'un anion de trifluorométhanesulfonate, d'un anion de fluorure d'hydrogène, d'un anion de sulfate de monohydrogène et d'un anion de phosphate de dihydrogène.

**14.** Système de régulation pour pile à combustible selon la revendication 1, dans lequel la substance polaire a une valeur de polarité supérieure à 30.

**15.** Système de régulation pour pile à combustible selon la revendication 1, dans lequel la substance polaire est un composé choisi dans le groupe constitué de l'eau, du méthanol, de l'éthanol, du propanol, du butanol, de l'éthylène glycol, du propylène glycol, du butylène glycol, de l'acétone, de l'acétonitrile, du diméthylsulfoxyde, du diméthylformamide, de la pyridine, de la -picoline, de l'acétate de méthyle, de l'acétate d'éthyle, de l'acétate de propyle, de l'acétate de butyle, de l'acide acétique, de l'oxyde d'éthylène, de l'oxyde de polyéthylène et de l'oxyde de polypropylène.

**16.** Système de régulation pour pile à combustible selon la revendication 2, dans lequel une teneur en eau de l'électrolyte

est de 0,01 à 50% en moles.

**17.** Système de régulation pour pile à combustible selon la revendication 2, dans lequel une teneur en eau de l'électrolyte est de 0,01 à 25% en moles.

**18.** Système de régulation pour pile à combustible selon la revendication 2, dans lequel une teneur en eau de l'électrolyte est de 0,01 à 10% en moles.

FIG. 1

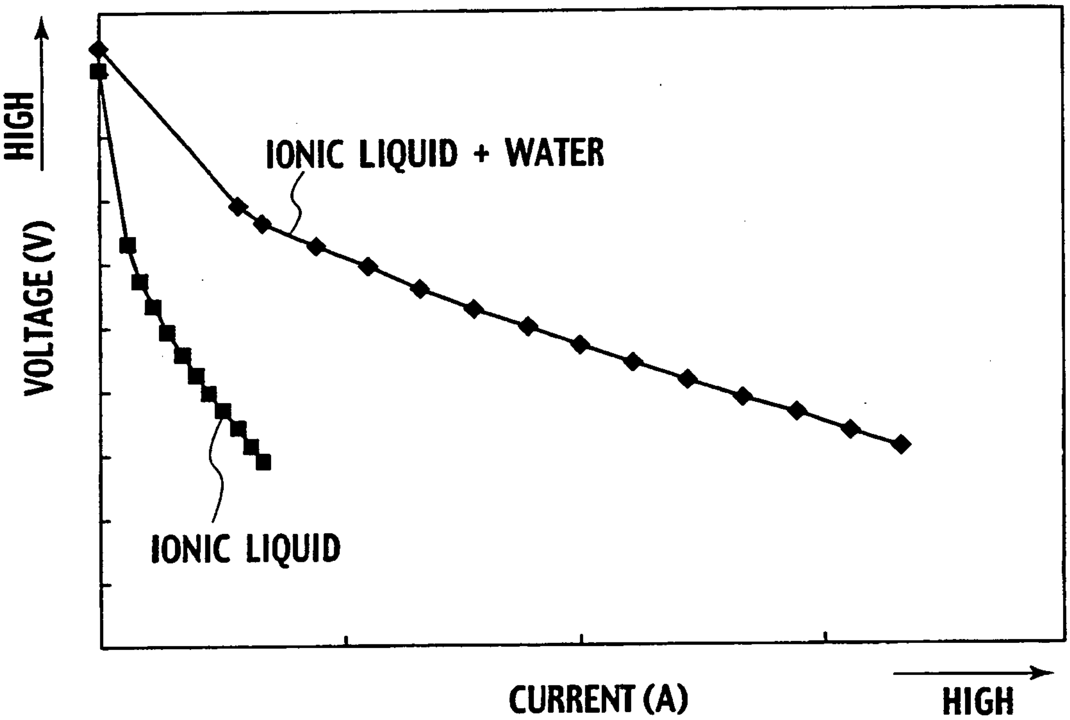
HIGH
VOLTAGE (V)
IONIC LIQUID + WATER
IONIC LIQUID
CURRENT (A)
HIGH

FIG. 2

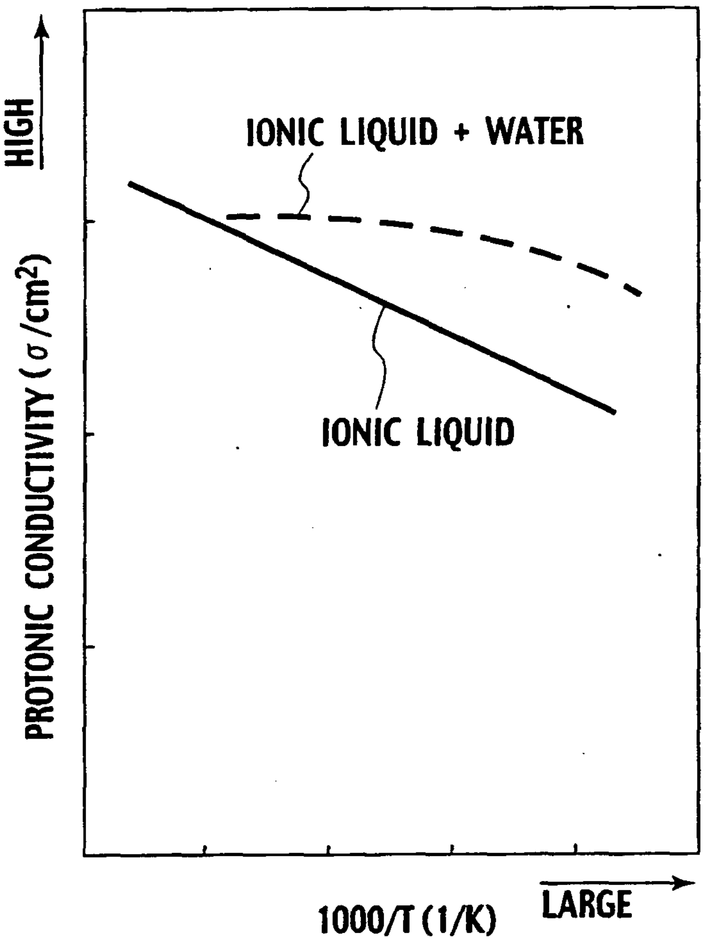
HIGH
PROTONIC CONDUCTIVITY ( σ /cm²)
IONIC LIQUID + WATER
IONIC LIQUID
1000/T (1/K)
LARGE

FIG. 3

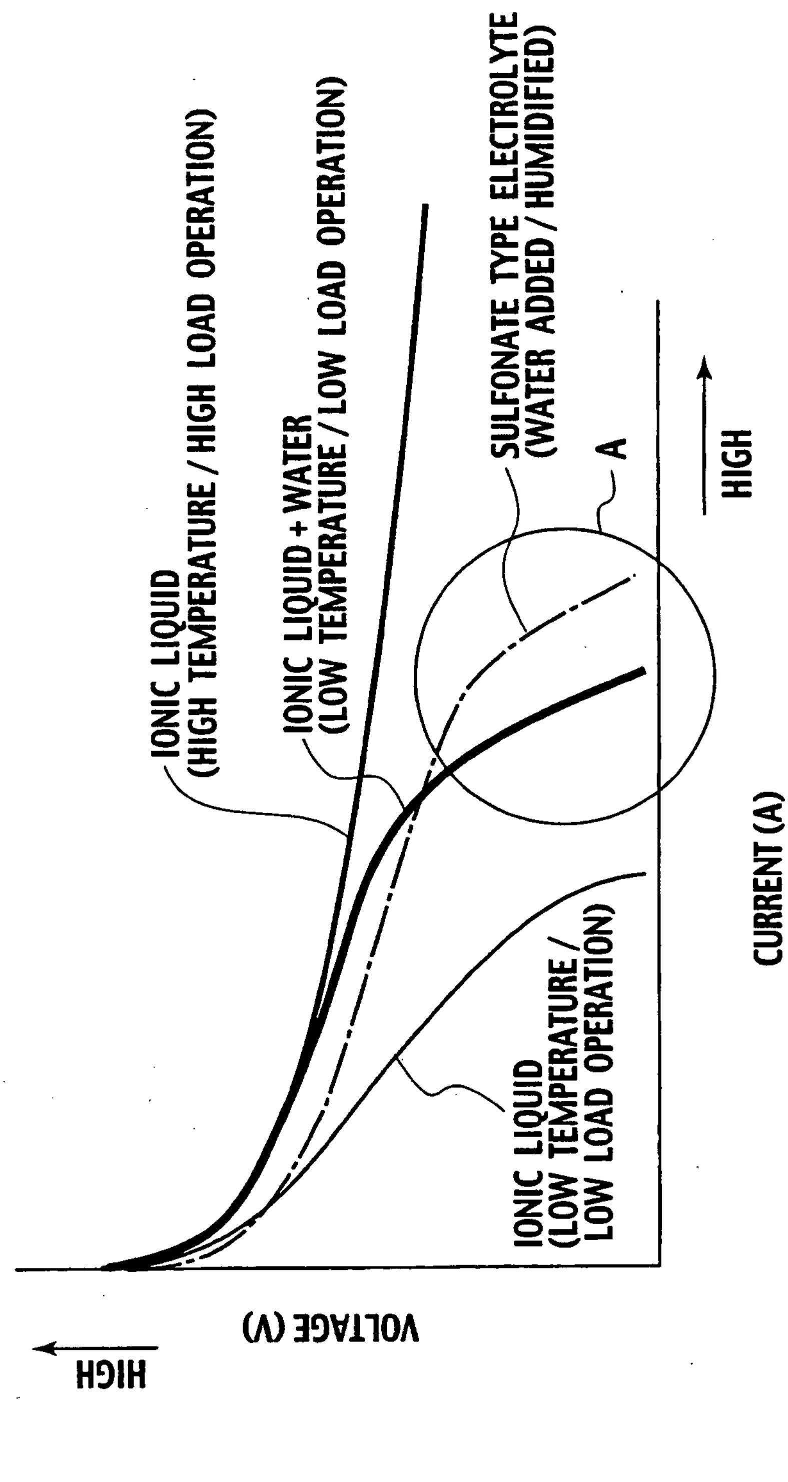
IONIC LIQUID
(HIGH TEMPERATURE / HIGH LOAD OPERATION)
IONIC LIQUID + WATER
(LOW TEMPERATURE / LOW LOAD OPERATION)
SULFONATE TYPE ELECTROLYTE
(WATER ADDED / HUMIDIFIED)
A
IONIC LIQUID
(LOW TEMPERATURE /
LOW LOAD OPERATION)
CURRENT (A)
HIGH
VOLTAGE (V)
HIGH

FIG. 4

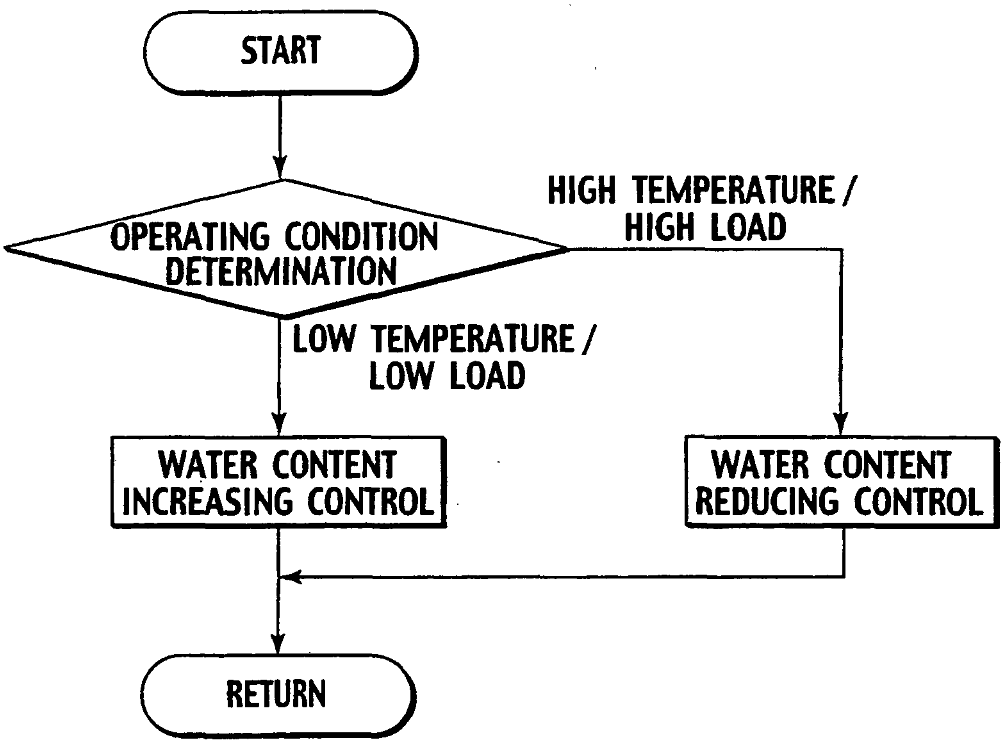
START
OPERATING CONDITION DETERMINATION
HIGH TEMPERATURE / HIGH LOAD
LOW TEMPERATURE / LOW LOAD
WATER CONTENT INCREASING CONTROL
WATER CONTENT REDUCING CONTROL
RETURN

FIG. 5

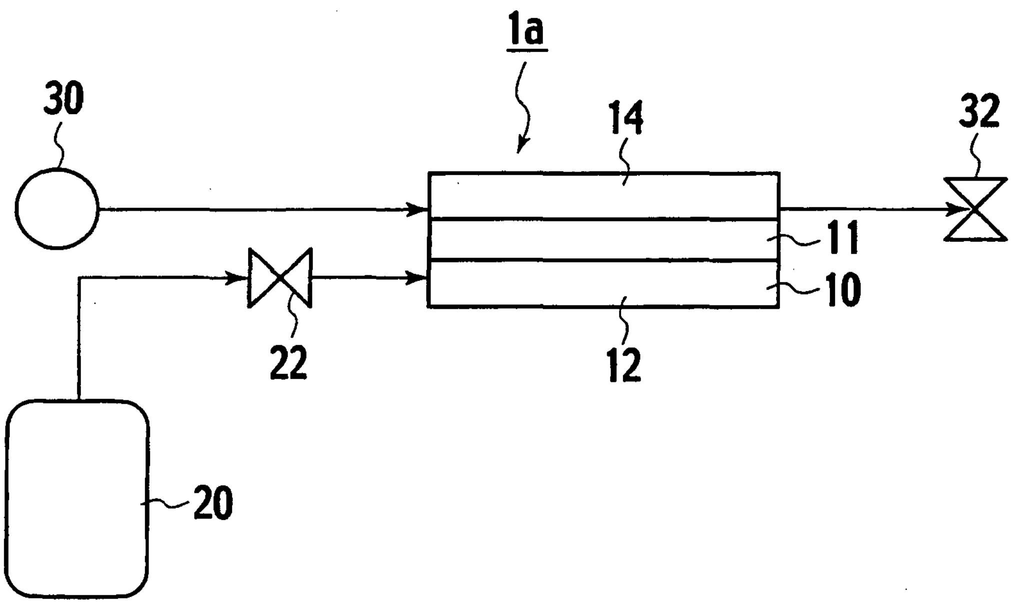
1a
30
14
32
11
10
22
12
20

FIG. 6

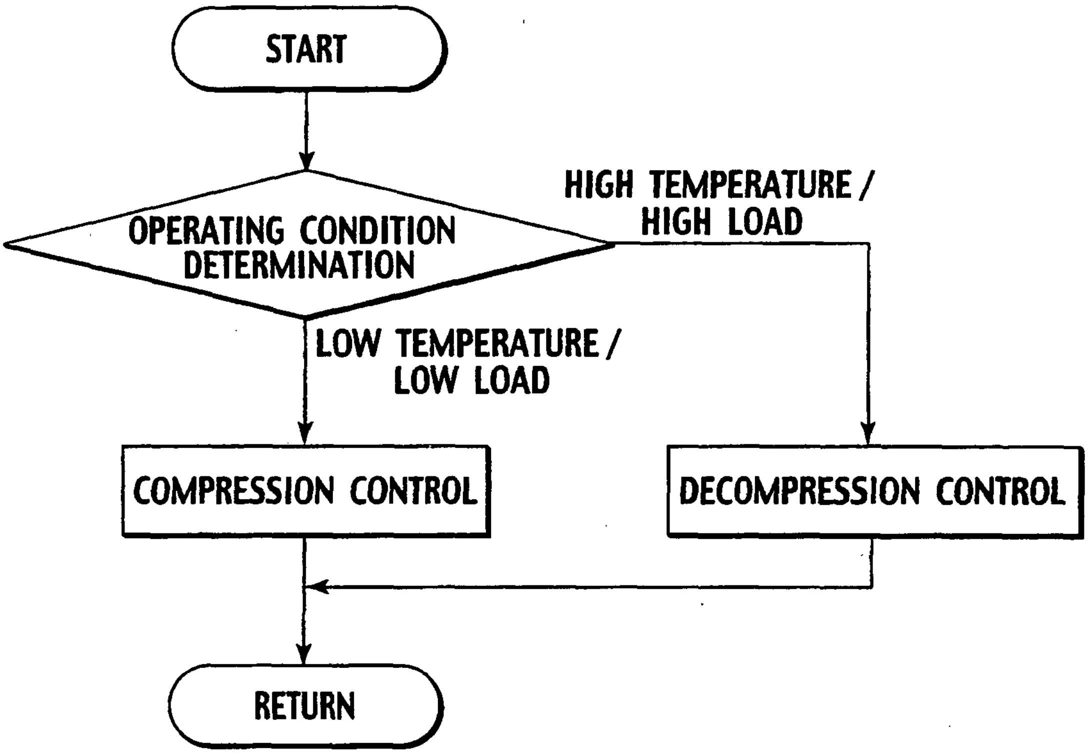
START
OPERATING CONDITION DETERMINATION
HIGH TEMPERATURE / HIGH LOAD
LOW TEMPERATURE / LOW LOAD
COMPRESSION CONTROL
DECOMPRESSION CONTROL
RETURN

FIG. 7

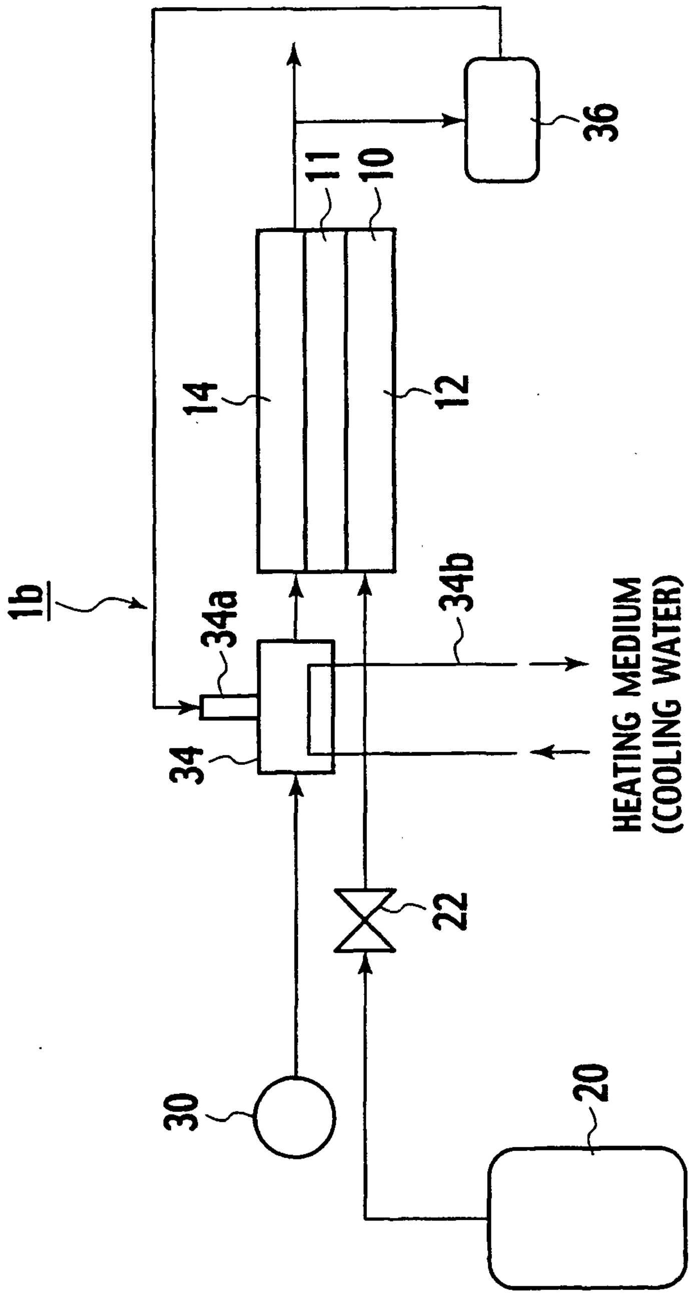
1b
34a
34
30
22
20
14
12
11
10
36
34b
HEATING MEDIUM
(COOLING WATER)

FIG. 8

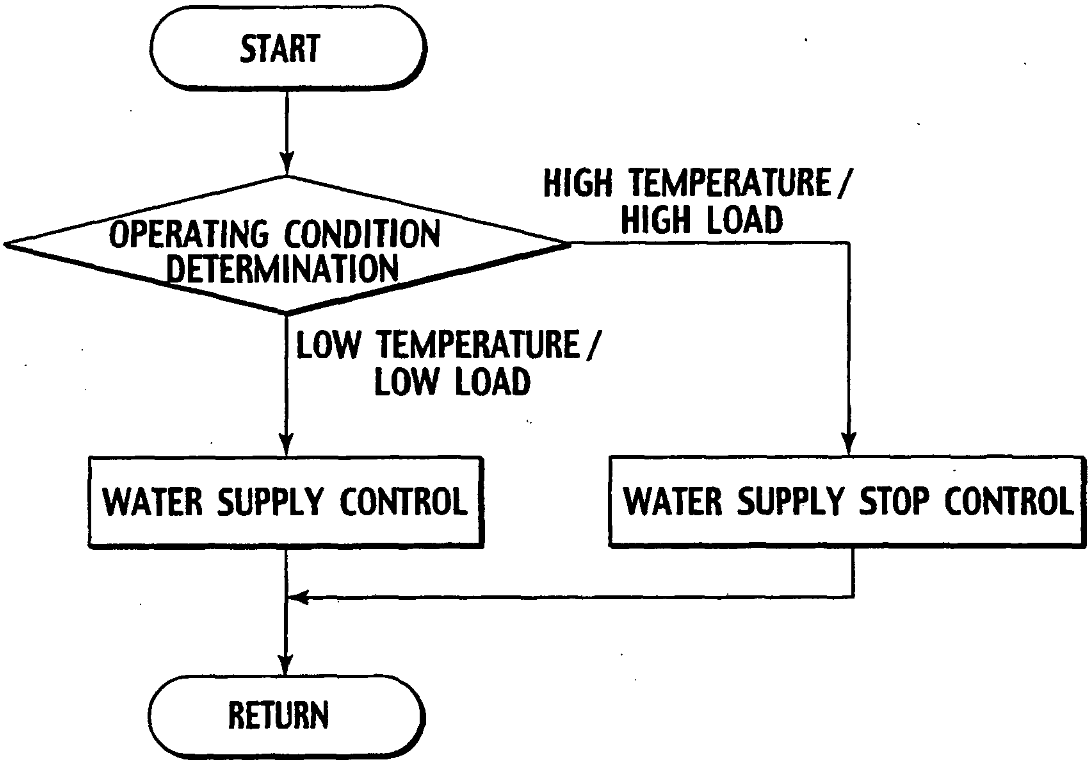
START
OPERATING CONDITION DETERMINATION
HIGH TEMPERATURE / HIGH LOAD
LOW TEMPERATURE / LOW LOAD
WATER SUPPLY CONTROL
WATER SUPPLY STOP CONTROL
RETURN

FIG. 9

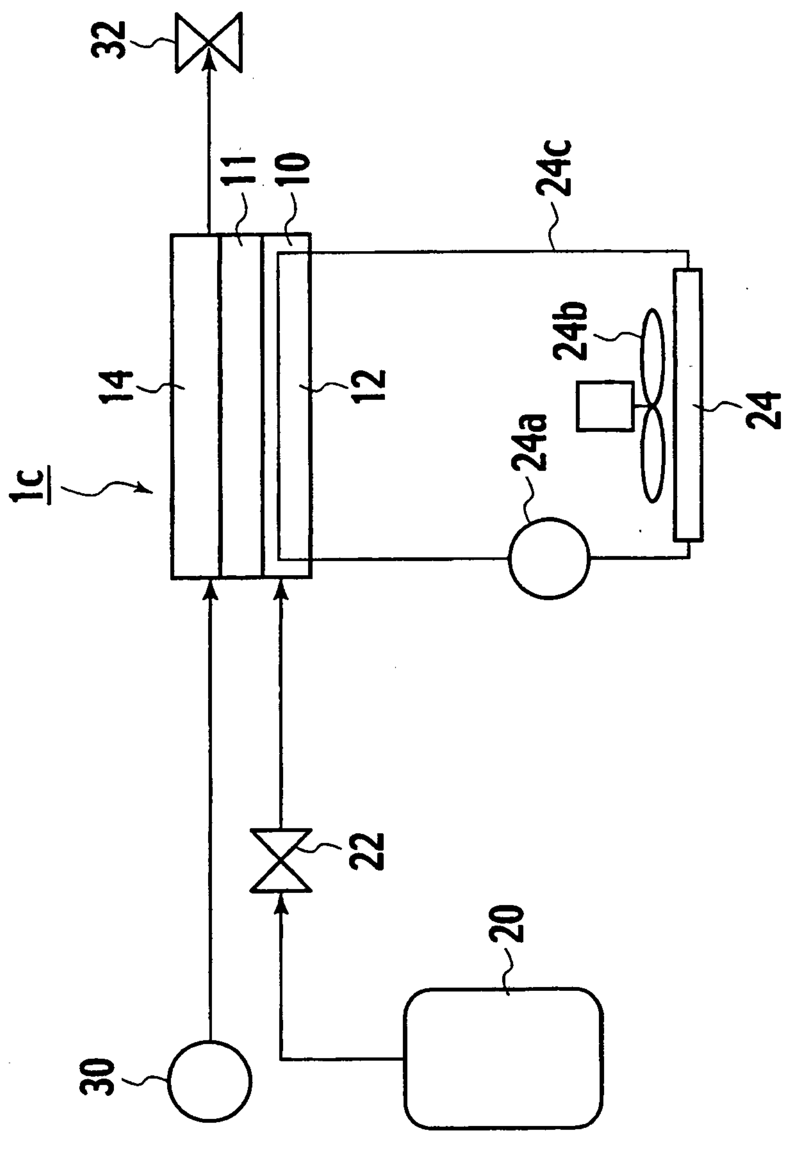

FIG. 10

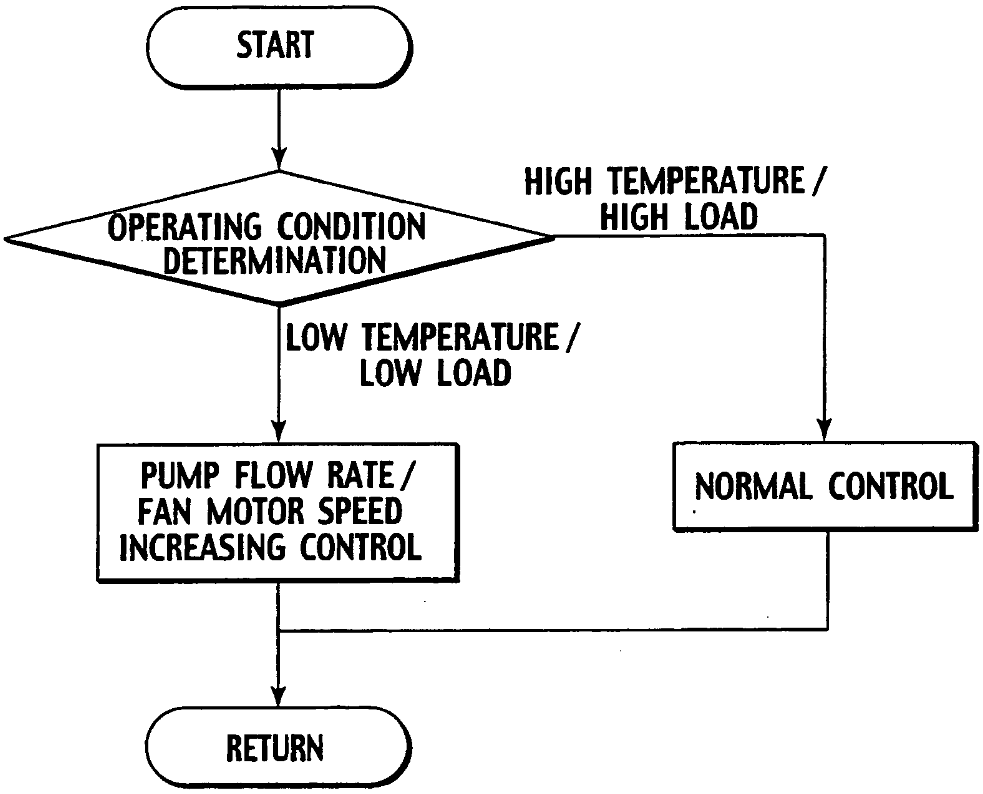
START
OPERATING CONDITION DETERMINATION
HIGH TEMPERATURE / HIGH LOAD
LOW TEMPERATURE / LOW LOAD
PUMP FLOW RATE / FAN MOTOR SPEED INCREASING CONTROL
NORMAL CONTROL
RETURN

FIG. 11

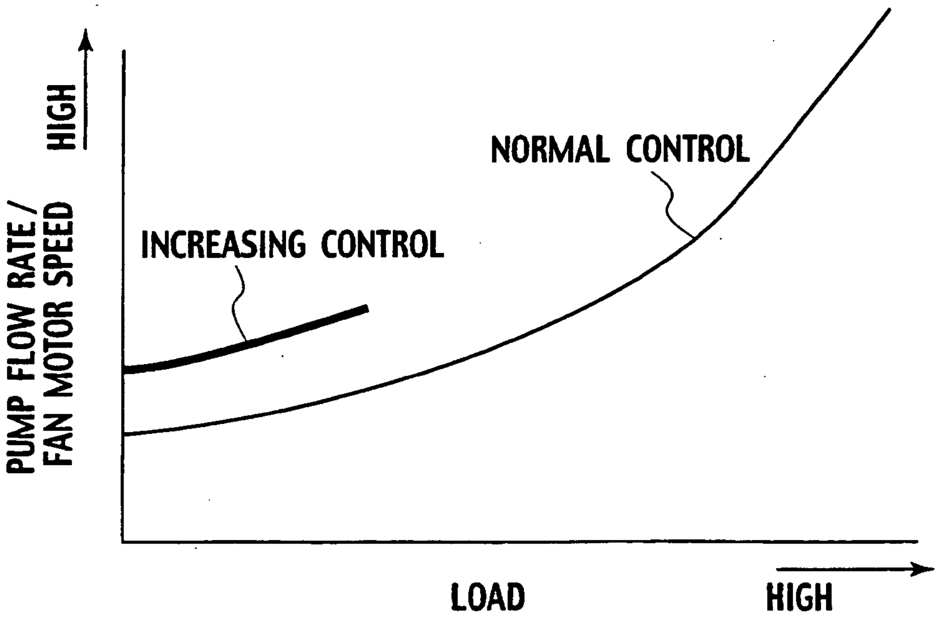
PUMP FLOW RATE / FAN MOTOR SPEED
HIGH
NORMAL CONTROL
INCREASING CONTROL
LOAD
HIGH

# FIG. 12

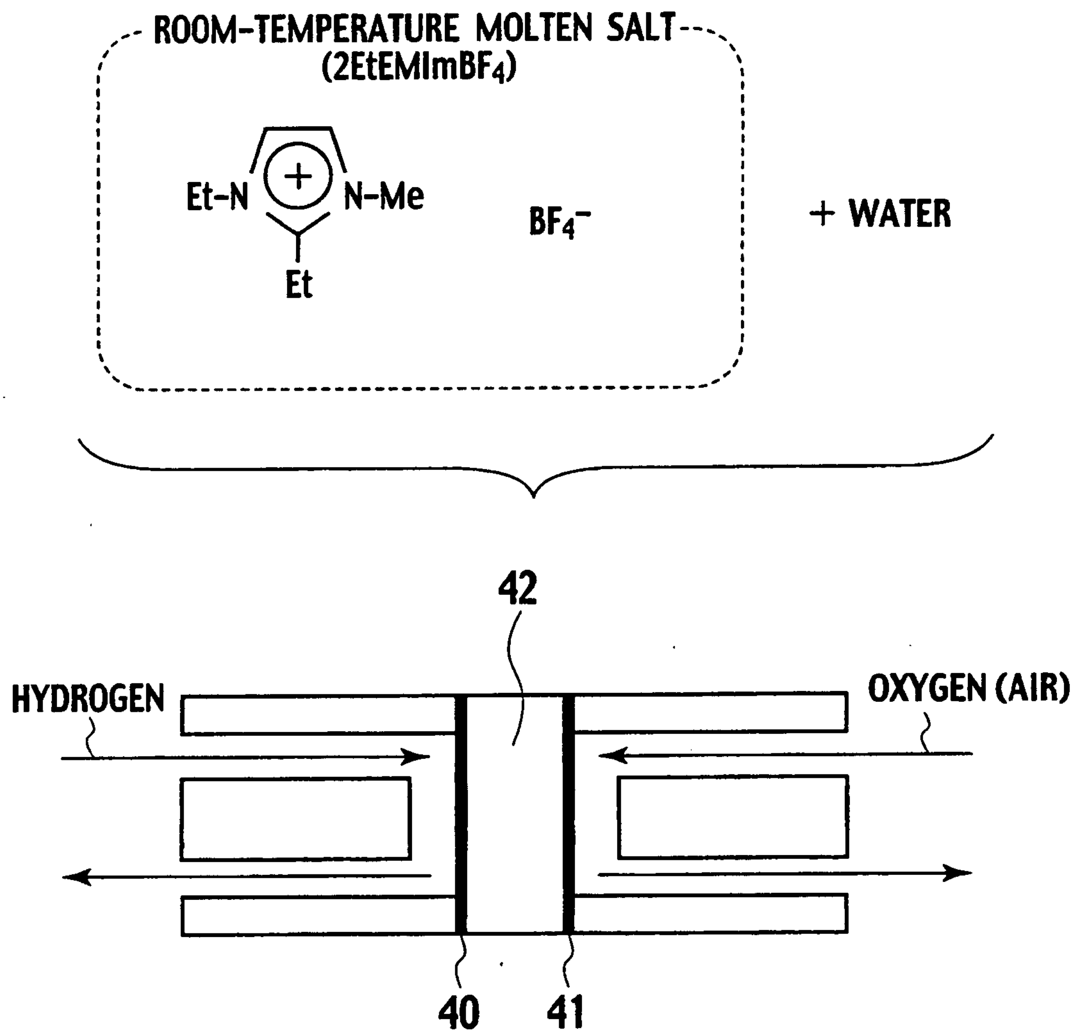
ROOM-TEMPERATURE MOLTEN SALT
($2EtEMImBF_4$)
$BF_4^-$
+ WATER
42
HYDROGEN
OXYGEN (AIR)
40
41

FIG. 13

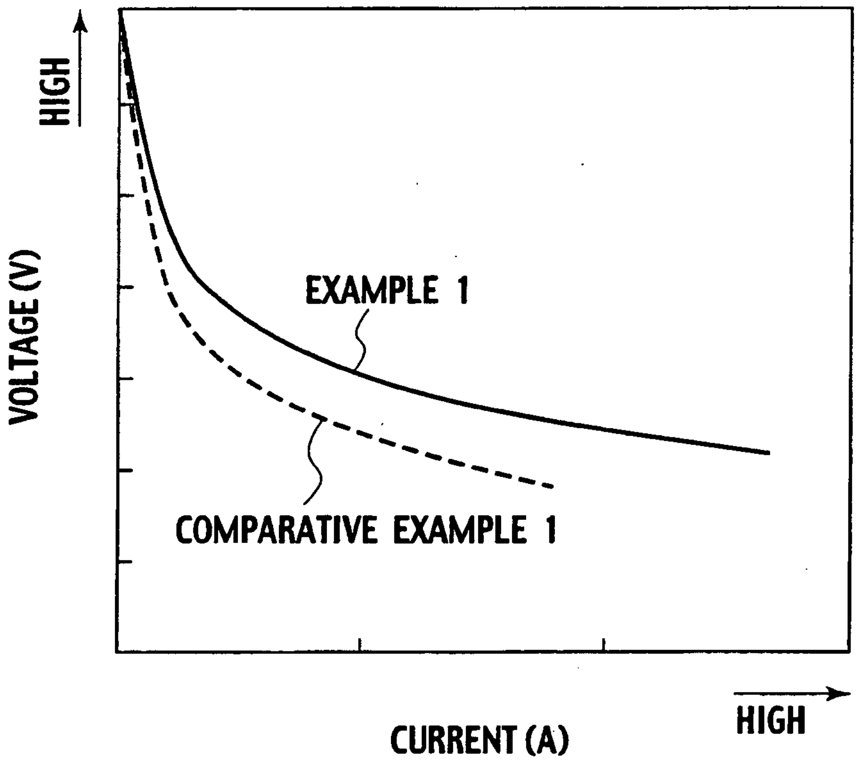
HIGH
VOLTAGE (V)
EXAMPLE 1
COMPARATIVE EXAMPLE 1
CURRENT (A)
HIGH

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003123791 A
- JP 2003535450 A


### Non-patent literature cited in the description


- Shin jikken kagaku kouza. Maruzen Co., Ltd,